# DEMANDE DE BREVET EUROPEEN

(11) **EP 1 514 767 A1**
(43) Date de publication de la demande: **16.03.2005**
(21) Numéro de dépôt: 04300582.6
(22) Date de dépôt: 08.09.2004
(51) Int. Cl.: B62D 25/06, B62D 25/20, B62D 27/04

(54) **Structure de véhicule automobile**

(30) Priorité: 09.09.2003 FR 0310620
(71) Demandeur: Peugeot Citroen Automobiles S.A., 78140 Vélizy Villacoublay (FR)
(72) Inventeur: Perrot, Philippe, 25200, MONTBELIARD (FR)
(74) Mandataire: De Cuenca, Emmanuel Jaime

(57) **Abrégé**

L'invention concerne une structure de véhicule automobile comportant une ossature sur laquelle sont fixés rigidement des panneaux tels que des planchers (2), ou pavillons, caractérisée en ce que l'un ou moins des panneaux (2) est fixé sur l'ossature par des moyens de fixation disposés au niveau de lignes nodales ou points immobiles lors des modes de vibrations résonnants de l'ossature, et en ce que des moyens (5) amortisseurs sont interposés entre le panneau (2) et l'ossature et/ou au niveau de l'ossature (16), de façon à assurer un découplage vibratoire entre l'ossature et le panneau (2, 3).

## Description

L'invention se rapporte à une structure de véhicule automobile.

L'invention concerne plus particulièrement une structure de véhicule automobile comportant une ossature sur laquelle sont fixés rigidement des panneaux tels que des planchers et des pavillons.

Le confort sonore d'un véhicule dépend du niveau de bruit dans l'habitacle. Une partie des bruits dans l'habitacle d'un véhicule est générée par la vibration des panneaux fixés sur l'ossature du véhicule, tels que des planchers ou pavillons.

Les modes de vibration d'une ossature sont les surtensions ou pics d'intensité qui apparaissent dans une structure qui se déforme sous l'influence de vibrations. Ces vibrations sont transmises aux panneaux qui réagissent comme la peau d'un tambour.

La diminution du bruit généré par les panneaux est obtenue soit par une solution d'isolation acoustique, soit en diminuant la réponse vibratoire des panneaux. En particulier, la réponse vibratoire des panneaux doit être supérieure à 200Hz, afin qu'ils ne soient pas couplés avec les fréquences de résonance des cavités de l'ossature du véhicule.

Les solutions connues d'isolation acoustique des panneaux ne sont pas complètement satisfaisantes et entraînent un surcoût important dans la fabrication du véhicule.

Un but de la présente invention est de pallier tout ou partie des inconvénients de l'art antérieur relevés ci-dessus.

A cette fin, la structure de véhicule selon l'invention, par ailleurs conforme à la définition générique qu'en donne le préambule ci-dessus, est essentiellement caractérisée en ce que l'un ou moins des panneaux est fixé sur l'ossature par des moyens de fixation disposés au niveau de lignes nodales ou points immobiles lors des modes de vibrations résonnants de l'ossature, et en ce que des moyens amortisseurs sont interposés entre le panneau et l'ossature et/ou au niveau de l'ossature, de façon à assurer un découplage vibratoire entre l'ossature et le panneau.

Par ailleurs, l'invention peut comporter l'une ou plusieurs des caractéristiques suivantes :
- l'ossature a une raideur en torsion inférieure à 1 mrd, et de préférence inférieure à 0,8 mrd,
- les moyens de fixation sont du type vis, rivet ou point de soudure,
- les moyens amortisseurs sont constitués d'un matériau du type élastomère et/ou viscoélastique et/ou silicone,
- les moyens amortisseurs ont une dureté comprise entre 60 à 90 shores environ et de préférence entre 70 et 80 shores,
- la structure comporte un panneau formant plancher fixé sur l'ossature par des moyens de fixation disposés au niveau de lignes nodales ou points immobiles lors des modes de vibrations résonnants de l'ossature, des moyens amortisseurs étant interposés entre le plancher et l'ossature de façon à assurer un découplage vibratoire entre l'ossature et le plancher,
- le plancher est constitué d'une ou plusieurs plaques empilées en matériau métallique embouti et/ou en matière plastique,
- le plancher comporte au moins une nervure de raidissement formée sur au moins une partie de l'une au moins de ses bordures,
- le plancher est fixé au niveau de sa périphérie sur la bordure d'une ouverture formée dans l'ossature,
- la bordure de l'ouverture de l'ossature a la forme d'un canal ou soyage, et en ce que les moyens amortisseurs sont constitués d'un cordon disposé dans le canal de la bordure, de façon à être interposé entre l'ossature et le plancher,
- la structure comporte un panneau formant un pavillon fixé d'une part sur des poutres longitudinales de l'ossature tel que des arcs de pavillon et, d'autre part, sur des poutres transversales telles que des traverses ou des croisillons, le pavillon étant fixé sur le reste de l'ossature par des moyens de fixation disposés au niveau de lignes nodales ou points immobiles lors des modes de vibrations résonnants de l'ossature, des moyens amortisseurs étant interposés entre le pavillon et au moins une poutre transversale de façon à assurer un découplage vibratoire entre le pavillon et l'ossature,
- la structure comporte un panneau formant un pavillon fixé d'une part sur des poutres longitudinales de l'ossature tel que des arcs de pavillon et, d'autre part, sur des poutres transversales telles que des traverses ou des croisillons, l'ensemble constitué du pavillon et des poutres transversales étant fixé sur le reste de l'ossature par des moyens de fixation disposés au niveau de lignes nodales ou points immobiles lors des modes de vibrations résonnants de l'ossature, des moyens amortisseurs étant interposés entre les poutres transversales et le reste de l'ossature de façon à assurer un découplage vibratoire entre d'une part l'ensemble constitué du pavillon et des poutres transversales et, d'autre part, le reste de l'ossature,
- la structure comporte des moyens amortisseurs disposés entre le pavillon et au moins une poutre transversale et constitués d'un ou plusieurs plots en matériau polymère et/ou viscoélastique,
- la structure comporte des moyens amortisseurs interposés entre les extrémités des poutres transversales et le reste de l'ossature et constitués d'un matériau polymère et/ou viscoélastique situé au niveau de l'encastrement de la poutre transversale sur une poutre longitudinale.

D'autres particularités et avantages apparaîtront à la lecture de la description ci-après, faite en référence aux figures dans lesquelles :
- la figure 1 représente une vue en perspective d'une ossature de véhicule automobile,
- la figure 2 représente une vue en coupe partielle illustrant la fixation d'un pavillon sur une ossature de véhicule selon un premier mode de réalisation de l'invention,
- la figure 3 représente une vue en coupe partielle illustrant la fixation d'un pavillon sur une ossature de véhicule selon un deuxième mode de réalisation de l'invention,
- la figure 4 représente une vue de dessus illustrant un croisillon destiné à supporter un pavillon selon un troisième mode de réalisation de l'invention,
- la figure 5 représente une vue de dessus de la partie inférieure de l'ossature du véhicule de la figure 1 munie d'un plancher,
- la figure 6 représente une demi-coupe selon la ligne AA de la figure 5, illustrant la fixation d'un plancher sur l'ossature selon l'invention,
- la figure 7 représente une vue agrandie de la demi-coupe de la figure 6,
- la figure 8 représente une vue en perspective d'un détail agrandi de la partie inférieure de l'ossature du véhicule de la figure 1 selon un autre mode de réalisation.

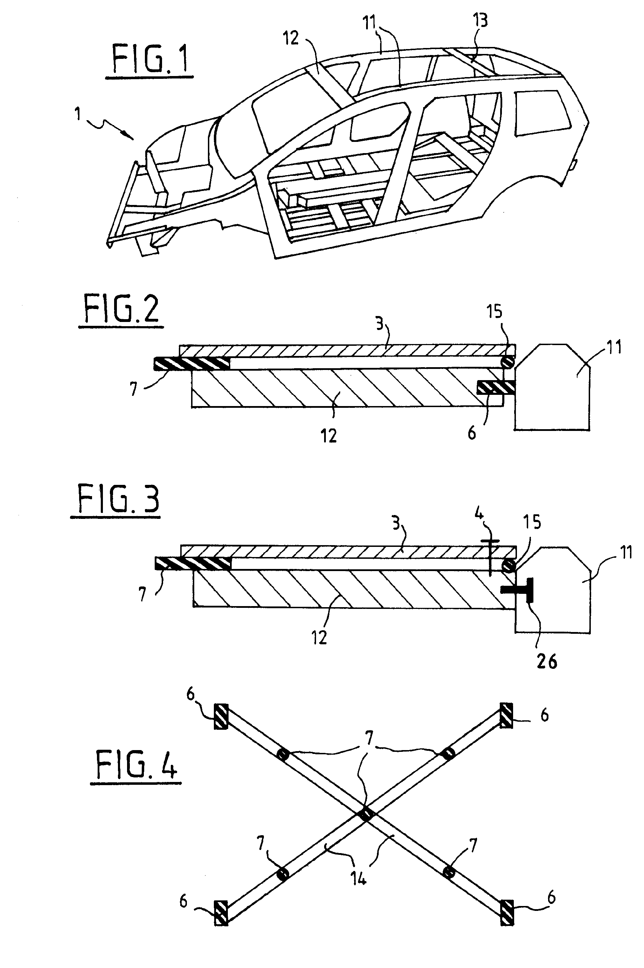

L'ossature 1 de véhicule automobile représentée à la figure 1 comprend, dans sa partie supérieure, des poutres longitudinales 11 ou arcs de pavillon et, d'autre part, des poutres transversales telles que des traverses 12, 13.

Les arcs de pavillon 11 et traverses 12, 13 délimitent une ouverture parallélépipédique destinée à être refermée par un panneau fixé sur l'ossature 1 formant un pavillon.

Selon un premier mode de réalisation représenté à la figure 2, les traverses 12 sont fixées à l'ossature 1 de façon découplée. C'est-à-dire que les traverses 12 sont fixées sur l'ossature 1 (arcs 11 de pavillon) par des moyens de fixation disposés au niveau de lignes nodales ou pointes immobiles de l'ossature lors des modes de vibrations résonnants de l'ossature. Plus précisément, les traverses 12 sont fixés sur les arcs de pavillons 11 au niveau des noeuds, c'est-à-dire des points calmes qui ne subissent pas ou peu de déplacement lors de la vibration de l'ossature 1. La fixation peut être réalisée par vissage et/ou rivetage et/ou soudure.

Ces noeuds ou lignes nodales (points immobiles ou quasi immobiles) sont déterminés classiquement par calcul au moyen de logiciels utilisant la technique des éléments finis de maillage de la surface ou du volume considéré. D'autres techniques existent pour déterminer ces points calmes, par exemple la technique connue de l'interférométrie doppler.

De plus, selon l'invention, un élément amortisseur 6 est interposé entre chaque extrémité de la traverse 12 et l'arc de pavillon 11 correspondant. C'est à dire que la traverse 12 est "isolée" de l'ossature 1 d'un point de vue vibratoire. Ainsi, les traverse 12 sont sollicitées principalement en tension/compression et amortissent ainsi les vibrations qu'elles subissent.

Le pavillon 3 est fixé quant à lui sur les traverses 12 de façon classique. Un joint 15 d'étanchéité peut être disposé au niveau de la périphérie du pavillon 3, pour assurer l'étanchéité entre l'intérieur et l'extérieur de l'habitacle. Selon l'invention, un moyen 7 amortisseur est interposé entre le pavillon 3 et les traverses 12. Le moyen amortisseur est constitué de préférence d'un ou plusieurs plots 7 en matériau élastomère tel que, par exemple, ceux commercialisés sous les marques SORBOTHANE® ou NAVCOM®. De préférence, le moyen amortisseur a une dureté comprise entre 70 et 80 shores environ.

Les plots 7 peuvent avoir des formes parallélépipédiques, cylindriques ou hémisphériques. De préférence, le ou les plots 7 ont des dimensions comprises entre 30 et 100 mm environ.

Les plots 7 sont préférentiellement placés au niveau des ventres de déformation du panneau, c'est-à-dire aux endroits susceptibles de subir les plus grands déplacements vibratoires (ces derniers sont déterminés de la même façon que les lignes nodales)

Ainsi, l'ensemble constitué du pavillon 3 et des traverses transversales 12 est découplé du reste de l'ossature 1 (tel un plafond flottant). On constate selon l'invention une diminution significative de la vibration du pavillon responsable de bourdonnements acoustiques.

Dans le mode de réalisation représenté à la figure 3, les éléments identiques à ceux décrits ci-dessus sont désignés par les mêmes références numériques et ne sont pas décrits à nouveau en détail.

Le mode de réalisation de la figure 3 diffère de celui précédemment décrit en ce que les traverses 12 sont fixées aux arcs de pavillon 11 de façon classique (c'est-à-dire sans découplage) au moyen, par exemple de vis, rivets 26 ou point de soudure.

Le pavillon 3 est fixé quant à lui sur les traverses 12 et/ou sur les arcs de pavillon 11 par des moyens 4 de fixation disposés au niveau de lignes nodales de l'ossature 1.

Un joint 15 d'étanchéité peut être disposé au niveau de la périphérie du pavillon 3, pour assurer l'étanchéité entre l'intérieur et l'extérieur de l'habitacle. Comme précédemment, un moyen 7 amortisseur est interposé entre le pavillon 3 et les traverses 12.

Ainsi, le pavillon 3 est découplé du reste de l'ossature 1 (traverses comprises), tel un plafond flottant, ce qui réduit significativement l'émission acoustique du pavillon 3.

Dans encore une autre variante de réalisation représentée à la figure 4, la ou les traverses sont remplacées ou suppléées par un système en croisillon constitué de deux poutres 14 croisées et dont les extrémités sont fixées aux arcs 11 de pavillon.

Comme précédemment, un élément amortisseur 6 peut être interposé entre chaque extrémité d'une poutre 14 de croisillon et l'arc de pavillon 11 correspondant, de façon à "isoler" d'un point de vue des vibrations le croisillon 14 de l'ossature 1. Un ou plusieurs plots amortisseurs 7 sont disposés sur le croisillon 14 de façon à être interposés entre le pavillon et le croisillon 14.

Par exemple, sur un ensemble de traverses en croix 14, il est possible de prévoir, un, trois, quatre ou cinq plots 7 destinés à amortir respectivement différents modes de vibration du pavillon 3. De façon classique, les modes de vibration croissants (1^{er}, 2^{ème}...) ont des fréquences de vibration croissantes et des amplitudes de vibration décroissantes. A titre d'exemples de configurations :
- dans le cas où un seul plot est utilisé, celui-ci peut être prévu pour amortir le 1^{er} mode de vibration,
- une configuration à trois plots, peut être prévue pour amortir les 1^{er} et 2^{ème} modes de vibration
- une configuration à quatre plots peut être prévue pour amortir uniquement le 2^{ème} mode de vibration, et
- une configuration à cinq plots peut être prévue pour amortir les 1^{er} et 2^{ème} modes de vibration.

Dans le cas d'un amortissement de deux modes distincts, les plots concernés ont des raideurs et viscoélasticité différentes, adaptées aux fréquences à amortir.

L'agencement selon l'invention confère par ailleurs au pavillon une bonne tenue et solidité sans nécessiter de pièces supplémentaires et permet en particulier de diminuer le nombre de points de soudure par rapport aux systèmes connus. Un tel agencement est en outre plus compatible avec un passage de l'ossature en cataphorèse.

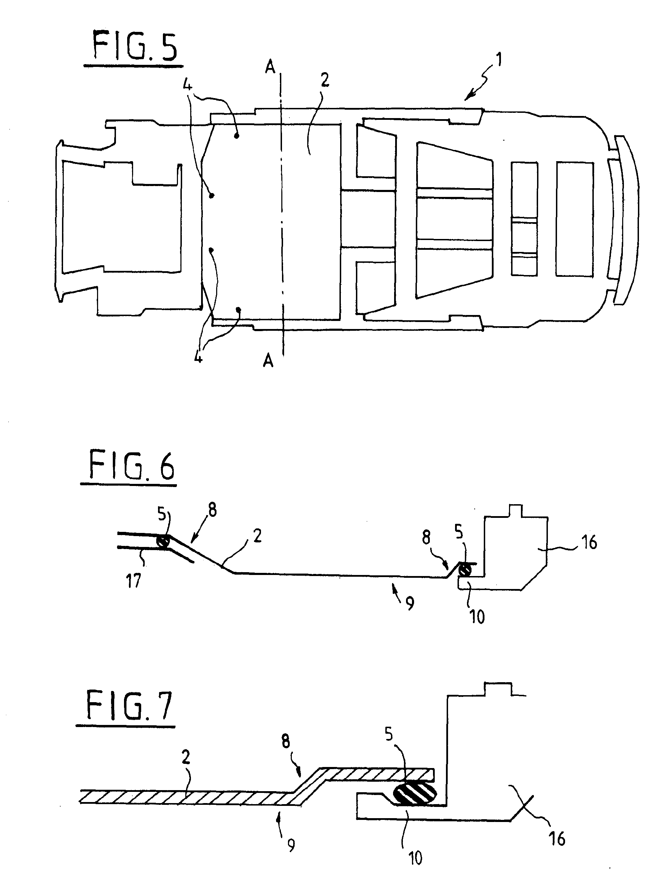

En se référant à présent aux figures 5 à 7, la structure de véhicule comporte un panneau formant plancher 2 fixé au niveau de sa périphérie sur la bordure 10 d'une ouverture 9 formée dans la partie inférieure de l'ossature 1. Dans cet exemple de réalisation le plancher 2 est celui situé en partie avant du véhicule. L'ouverture 9 est située par exemple entre un longeron 16 et un tunnel 17 de la partie inférieure de l'ossature.

Le plancher est constitué par exemple d'une ou plusieurs plaques métalliques empilées ou d'un empilement en sandwich des plaques métalliques embouties et de plaques en matière plastique. Une nervure 8 de raidissement peut être prévue sur le pourtour du plancher 2.

Selon l'invention, le plancher 2 est fixé sur l'ossature 1 par des moyens 4 de fixation disposés au niveau de lignes nodales ou points immobiles lors des modes de vibrations résonnants de l'ossature 1. Par exemple, les lignes nodales du premier mode de résonance du plancher sont situées sur le pourtour du plancher 2. Les ventres (c'est-à-dire les points de déformation maximum) sont situés dans la partie centrale du plancher 2.

Les moyens de fixation peuvent comporter des vis, rivets, points de soudure ou tout autre système équivalent.

En outre, des moyens 5 amortisseurs sont interposés entre le plancher 2 et l'ossature 1. Ces moyens amortisseurs peuvent être constitués des mêmes matériaux que ceux mentionnés ci-dessus. De préférence, les moyens amortisseurs sont disposés au niveau des ventres, donc sensiblement au centre du plancher en ce qui concerne le premier mode de vibration.

Ainsi, l'invention assure un découplage vibratoire entre l'ossature 1 et le plancher 2. Les moyens 5 amortisseurs sont constitués de préférence d'un cordon 5 formant une boucle fermée au niveau de la bordure 10 de l'ouverture 9. Ce cordon 5 est déposé par exemple, par une buse lors de la fabrication de l'ossature. A cet effet, la bordure 10 de l'ouverture 9 peut avoir la forme d'un canal ou soyage concave destiné à accueillir le cordon 5 amortisseur.

L'agencement d'un tel plancher selon l'invention présente une bonne solidité et tenue dans le temps et ne nécessite pas de joints d'étanchéité supplémentaires comme dans les dispositifs de l'art antérieur. En particulier, l'invention permet de garantir un bon confort acoustique malgré une fixation des panneaux par de simples vis, rivets ou points de soudure. En effet, la fixation des panneaux selon l'invention au niveau de lignes nodales avec ajout de moyens amortisseurs simples, permet de s'affranchir des dispositifs de fixation de l'art antérieur qui comportent des moyens de filtrage complexes et coûteux.

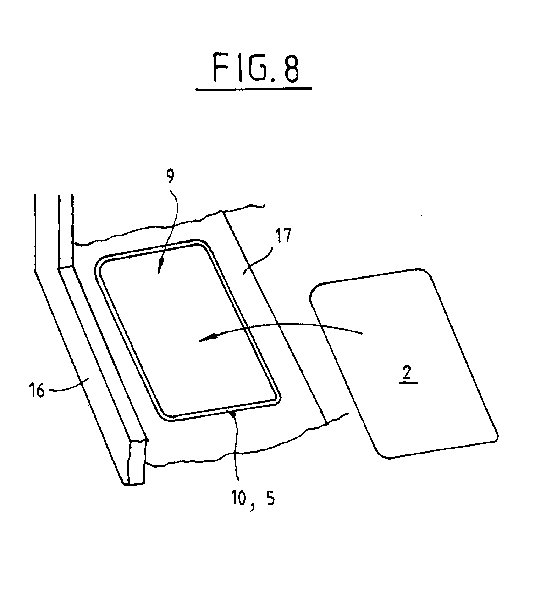

L'agencement du plancher 2 selon l'invention permet ainsi de réaliser une étanchéité entre le plancher 2 et l'ossature 1 du type "médaillon" comme représenté à la figure 8. Cette configuration permet de s'affranchir des systèmes d'étanchéités par cordon de mastic réalisés à la jonction de chaque paire de tôles adjacentes, sans aucune logique géométrique.

L'invention s'applique en particulier de façon avantageuse aux structures de véhicules dont l'ossature a une raideur en torsion inférieure à 1 mrd, et de préférence inférieure à 0,8 mrd. De cette façon, le découplage vibratoire d'un ou plusieurs panneaux par rapport à l'ossature a des conséquences très limitées sur la tenue aux chocs de la structure (respect des conditions d'homologation en cas de choc avec intrusion).

L'invention peut bien entendu s'appliquer à d'autres exemples de panneaux de structures de véhicule automobile.

## Revendications

1. Structure de véhicule automobile comportant une ossature (1) sur laquelle sont fixés rigidement des panneaux tels que des planchers (2), ou pavillons (3), **caractérisée en ce que** l'un ou moins des panneaux (2, 3) est fixé sur l'ossature par des moyens (4) de fixation disposés au niveau de lignes nodales ou points immobiles lors des modes de vibrations résonnants de l'ossature (1), et **en ce que** des moyens (5, 6, 7) amortisseurs sont interposés entre le panneau (2, 3) et l'ossature (1) et/ou au niveau de l'ossature (1), de façon à assurer un découplage vibratoire entre l'ossature (1) et le panneau (2, 3).

2. Structure selon la revendication 1, **caractérisée en ce que** l'ossature a une raideur en torsion inférieure à 1 mrd, et de préférence inférieure à 0,8 mrd.

3. Structure selon l'une quelconque des revendications 1 ou 2, **caractérisée en ce que** les moyens (4) de fixation sont du type vis, rivet ou point de soudure.

4. Structure selon l'une quelconque des revendications 1 à 3, **caractérisée en ce que** les moyens (5, 6, 7) amortisseurs sont constitués d'un matériau du type élastomère et/ou viscoélastique et/ou silicone.

5. Structure selon l'une quelconque des revendications 1 à 4, **caractérisée en ce que** les moyens (5, 6, 7) amortisseurs ont une dureté comprise entre 60 à 90 shores environ et de préférence entre 70 et 80 shores.

6. Structure selon l'une quelconque des revendications 1 à 5, **caractérisée en ce qu'**elle comporte un panneau formant plancher (2) fixé sur l'ossature par des moyens (4) de fixation disposés au niveau de lignes nodales ou points immobiles lors des modes de vibrations résonnants de l'ossature (1), et **en ce que** des moyens (5, 6, 7) amortisseurs sont interposés entre le plancher (2) et l'ossature (1) de façon à assurer un découplage vibratoire entre l'ossature et le plancher (2).

7. Structure selon la revendication 6, **caractérisée en ce que** le plancher (2) est constitué d'une ou plusieurs plaques empilées en matériau métallique embouti et/ou en matière plastique.

8. Structure selon la revendication 7, **caractérisée en ce que** le plancher (2) comporte au moins une nervure (8) de raidissement formée sur au moins une partie de l'une au moins de ses bordures.

9. Structure selon l'une quelconque des revendications 6 à 8, **caractérisée en ce que** le plancher (2) est fixé au niveau de sa périphérie sur la bordure (10) d'une ouverture (9) formée dans l'ossature (1).

10. Structure selon la revendication 9, **caractérisée en ce que** la bordure (10) de l'ouverture (9) de l'ossature (1) a la forme d'un canal ou soyage, et **en ce que** les moyens (5, 6, 7) amortisseurs sont constitués d'un cordon (5) disposé dans le canal de la bordure (10), de façon à être interposé entre l'ossature (1) et le plancher (2).

11. Structure selon l'une quelconque des revendications 1 à 5, **caractérisée en ce qu'**elle comporte un panneau formant un pavillon (3) fixé d'une part sur des poutres longitudinales (11) de l'ossature (1) tel que des arcs de pavillon et, d'autre part, sur des poutres transversales telles que des traverses (12, 13) ou des croisillons (14), et **en ce que** le pavillon (3) est fixé sur le reste de l'ossature (1) par des moyens (4) de fixation disposés au niveau de lignes nodales ou points immobiles lors des modes de vibrations résonnants de l'ossature (1), et **en ce que** des moyens (5, 6, 7) amortisseurs sont interposés entre le pavillon (3) et au moins une poutre (12, 13, 14) transversale de façon à assurer un découplage vibratoire entre le pavillon (3) et l'ossature (1).

12. Structure selon l'une quelconque des revendications 1 à 5, **caractérisée en ce qu'**elle comporte un panneau formant un pavillon (3) fixé d'une part sur des poutres longitudinales (11) de l'ossature (1) tel que des arcs de pavillon et, d'autre part, sur des poutres transversales telles que des traverses (12, 13) ou des croisillons (14), et **en ce que** l'ensemble constitué du pavillon (3) et des poutres transversales (12, 13, 14) est fixé sur le reste de l'ossature (1) par des moyens (4) de fixation disposés au niveau de lignes nodales ou points immobiles lors des modes de vibrations résonnants de l'ossature (1), et **en ce que** des moyens (5, 6, 7) amortisseurs sont interposés entre les poutres (12, 13, 14) transversales et le reste de l'ossature (1) de façon à assurer un découplage vibratoire entre d'une part l'ensemble constitué du pavillon (3) et des poutres transversales (12, 13, 14) et, d'autre part, le reste de l'ossature (1).

13. Structure selon l'une quelconque des revendications 11 ou 12, **caractérisée en ce qu'**elle comporte des moyens amortisseurs disposés entre le pavillon (3) et au moins une poutre (12, 13, 14) transversale et constitués d'un ou plusieurs plot (7) en matériau polymère et/ou viscoélastique.

14. Structure selon l'une quelconque des revendications 11 à 13, **caractérisée en ce qu'**elle comporte des moyens amortisseurs interposés entre les extrémités des poutres (12, 13, 14) transversales et le reste de l'ossature (1) et constitués d'un matériau polymère et/ou viscoélastique situé au niveau de l'encastrement de la poutre transversale (12, 13, 14) sur une poutre longitudinale (11).
